# EUROPEAN PATENT APPLICATION

(11) **EP 4 601 415 A1**
(43) Date of publication of application: **13.08.2025**
(21) Application number: 25155681.7
(22) Date of filing: 03.02.2025
(51) Int. Cl.: H05B 45/12, H05B 47/11

(54) **LIGHTING CONTROL SYSTEMS**

(30) Priority: 07.02.2024 TW 113105041
(71) Applicant: Lee, Yu-Lin, 249 New Taipei City (TW)
(72) Inventor: Lee, Yu-Lin, 249 New Taipei City (TW); Huang, Kuo-Chung, 249 New Taipei City (TW)
(74) Representative: John, Stefano Pasquale

(57) **Abstract**

The lighting control system includes a switch-mode power supply and a control circuit. The switch-mode power supply has an input terminal for connection to a power source and an output terminal for connection to a LED light source and further includes a PWMD pin and a linear dimming (LD) pin. The control circuit includes a photosensor and a resistor connected in series and is connected at one end to a DC voltage and grounded at the other end. The junction between the photosensor and the resistor is connected to the PWMD pin or the LD pin. The photosensor is adapted for sensing ambient light intensity to make the control circuit output a control voltage. The control voltage is transmitted to the switch-mode power supply via the PWMD pin or the LD pin, so that the LED light source is turned on or off.

## Description

### BACKGROUND OF THE INVENTION

### 1. Field of the Invention

The present invention relates to lighting control systems and particularly to those that include a switch-mode power supply for supplying electric power and are capable of automatically turning on or off light-emitting diodes in response to a change in the ambient light intensity.

### 2. Description of Related Art

Light Emitting Diodes (LEDs) show many advantages such as light weight, small size, high light efficiency, and long service lifespan. As a new generation light source, they have been increasingly applied in various illumination applications.

Currently, most LED lamps on the market are powered by either mains electricity or rechargeable batteries through USB connection, and their lighting is mainly controlled manually by the users. If the lights are left on due to negligence or forgetfulness, it not only wastes energy but also generates heat over prolonged periods, which could lead to lamps' degradation and shorten their lifespan. Motion-sensing lamps have emerged to address the drawbacks. These lamps are equipped with sensors that control the lighting, activating the light automatically when there is a need for illumination, thereby saving energy consumption and extending the lifespan of the lamps.

One type of motion-sensing lamps known in the art mainly employ infrared emission and reception technology to achieve lighting control. They primarily adopt passive infrared (PIR) sensors for detecting the presence of moving objects that emit infrared radiation within a predetermined sensing range, thereby determining if there is a human or an animal entering or leaving the sensing area. Lights are activated immediately in response to the detection of a human or an animal, and will be turned off automatically when no motion has been detected for a period of time, thus providing energy-saving benefits and prolonging the lamp's lifespan.

Another type of motion-sensing lamps are equipped with a brightness sensing module for lighting management. The lamps will be turned on or off based on the ambient light intensity measured by the brightness sensing module. The lamps of this type may be constructed to automatically turn on during the night and turn off during the day, offering both convenience and energy-saving benefits. Nevertheless, there is still a need for the related industry to develop more useful and ideal lighting control systems to meet consumers' requirements.

### SUMMARY OF THE INVENTION

In response to the market's need above, the present invention provides lighting control systems that include a switch-mode power supply for supplying electric power and are capable of automatically turning on or off light-emitting diodes in response to a change in the ambient light intensity.

In one aspect, provided herein is a lighting control system, which comprises: a switch-mode power supply, comprising an input terminal for connection to a power source and an output terminal for connection to a light-emitting diode (LED) light source, wherein the switch-mode power supply further comprises a pulse-width modulation dimming (PWMD) pin; and a control circuit, comprising a photosensor and a resistor connected in series, wherein the control circuit is connected at one end to a DC voltage and grounded at the other end, and the PWMD pin is connected to a junction between the photosensor and the resistor, and wherein the photosensor is adapted to sense the ambient light intensity, so that a control voltage varying with the ambient light intensity is transmitted to the switch-mode power supply via the PWMD pin, thereby turning the LED light source on or off.

The invention utilizes a photosensor to sense ambient light intensity, thereby automatically turning on or off the LED light source. Furthermore, the control circuit disclosed herein is directly connected to a switch-mode power supply, without altering the existing circuit layout of the switch-mode power supply. This arrangement enables automatic on-off control of the LED light source, while achieves energy-saving benefits and makes installation quite convenient, thereby enhancing user willingness to use.

In a preferred embodiment, the resistor is serially connected to the DC voltage, while the photosensor is serially connected between the resistor and the ground.

In a preferred embodiment, the photosensor is serially connected to the DC voltage, while the resistor is serially connected between the photosensor and the ground, and wherein the PWMD pin is connected to a junction between the photosensor and the resistor through an inverter.

In another aspect, provided herein is a lighting control system, which comprises: a switch-mode power supply, comprising an input terminal for connection to a power source and an output terminal for connection to a light-emitting diode (LED) light source, wherein the switch-mode power supply further comprises a linear dimming (LD) pin; and a control circuit, comprising a photosensor and a resistor connected in series, wherein the control circuit is connected at one end to a DC voltage and grounded at the other end, and the LD pin is connected to a junction between the photosensor and the resistor, and wherein the photosensor is adapted to sense the ambient light intensity, so that a control voltage varying with the ambient light intensity is transmitted to the switch-mode power supply via the LD pin, thereby turning the LED light source on or off.

In a preferred embodiment, the resistor is serially connected to the DC voltage, while the photosensor is serially connected between the resistor and the ground, and wherein the LD pin is connected to the junction between the photosensor and the resistor through a diode.

In a preferred embodiment, the diode has a forward biasing voltage.

### BRIEF DESCRIPTION OF THE DRAWINGS

FIG. 1 is a schematic structural diagram showing the lighting control system according to the first embodiment of the invention;
FIG. 2 is a schematic structural diagram showing the lighting control system according to the second embodiment of the invention;
FIG. 3 is a schematic structural diagram showing the lighting control system according to the third embodiment of the invention; and
FIG. 4 is a schematic structural diagram showing the lighting control system according to the fourth embodiment of the invention.

### DETAILED DESCRIPTION OF THE INVENTION

The above and other objects, features and effects of the invention will become apparent with reference to the following description of the preferred embodiments taken in conjunction with the accompanying drawings.

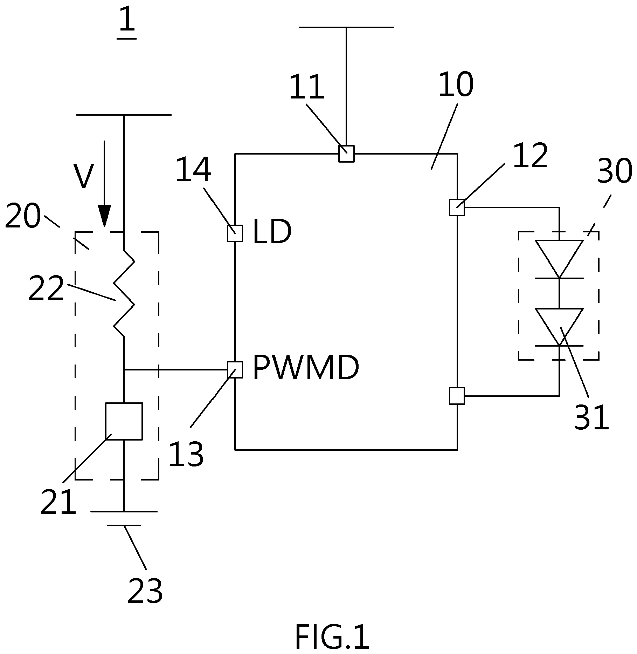

FIG. 1 is a schematic structural diagram showing the lighting control system according to the first embodiment of the invention. The lighting control system herein comprises a switch-mode power supply 10 and a control circuit 20.

The switch-mode power supply 10 comprises an input terminal 11 for connection to a power source and an output terminal 12 for connection to a light-emitting diode (LED) light source 30. The switch-mode power supply 10 further comprises a pulse-width modulation dimming (PWMD) pin 13 and a linear dimming (LD) pin 14. The LED light source 30 comprises at least one LED 31.

The control circuit 20 comprises a photosensor 21 and a resistor 22 connected in series. The control circuit 20 is connected at one end to a DC voltage V and grounded at the other end 23. The PWMD pin 13 is connected to a junction between the photosensor 21 and the resistor 22. According to the first embodiment illustrated in FIG. 1, the resistor 22 is serially connected to the DC voltage V, while the photosensor 21 is serially connected between the resistor 22 and the ground 23. The photosensor 21 is adapted to sense the ambient light intensity. As the ambient light intensity increases, the electrical resistance of the photosensor 21 decreases. Alternatively, when the ambient light intensity decreases, the electrical resistance of the photosensor 21 gets increased. As a result, a control voltage varying with the ambient light intensity is transmitted to the switch-mode power supply 10 via the PWMD pin 13, thereby turning the LED light source 30 on or off. The photosensor 21 may be selected from a photoresistor, a photodiode, a phototransistor, a solar panel, or other electronic component that varies its electrical resistance as a function of light intensity.

During use, the input terminal 11 is first connected to the power source, and the photosensor 21 is allowed to sense the ambient light intensity. In the case of a high ambient light intensity, the photosensor 21 exhibits a low resistance, whereby the DC voltage V is converted into a low control voltage by the photosensor 21 and the resistor 22. The low control voltage is transmitted to the switch-mode power supply 10 through the PWMD pin 13, causing the LED light source 30 to turn off. Alternatively, when the ambient light intensity is low, the resistance of the photosensor 21 increases, leading to a high control voltage output to the PWMD pin 13, thereby turning on the LED light source 30. Therefore, by virtue of simply connecting the control circuit 20 to the PWMD pin 13 that is built-in on the switch-mode power supply 10, the invention can output a control voltage based on the ambient light intensity detected by the photosensor 21, thereby serving as an automatic switch that turns on or off the LED light source 30 without disconnection from the power source. To reiterate, the control circuit 20 is employed to sense the ambient light intensity, so that the LED light source 30 is turned on or off automatically in response to a change in the ambient light intensity.

Conventionally, the built-in PWMD pin 13 of the switch-mode power supply 10 is adapted to receive PWM digital signals to rapidly turn the LED light source 30 on and off multiple times to achieve dimming. In contrast, the PWMD pin 13 is primarily used herein as a switch, while the control circuit 20 acts to sense the ambient light intensity. When the ambient light intensity increases, the control circuit 20 outputs a low control voltage to the PWMD pin 13, causing the LED light source 30 to turn off. Alternatively, when the ambient light intensity decreases, the control circuit 20 outputs a high control voltage to the PWMD pin 13, causing the LED light source 30 to turn on. This circuit layout eliminates the need for manual switching, achieving automatic on-off control of the LED light source 30. Essentially, the PWMD pin is used herein as a switch for turning the LED light source on or off upon receiving an analog signal from the control circuit and, therefore, performs a function quite different from the dimming function it was originally designed for.

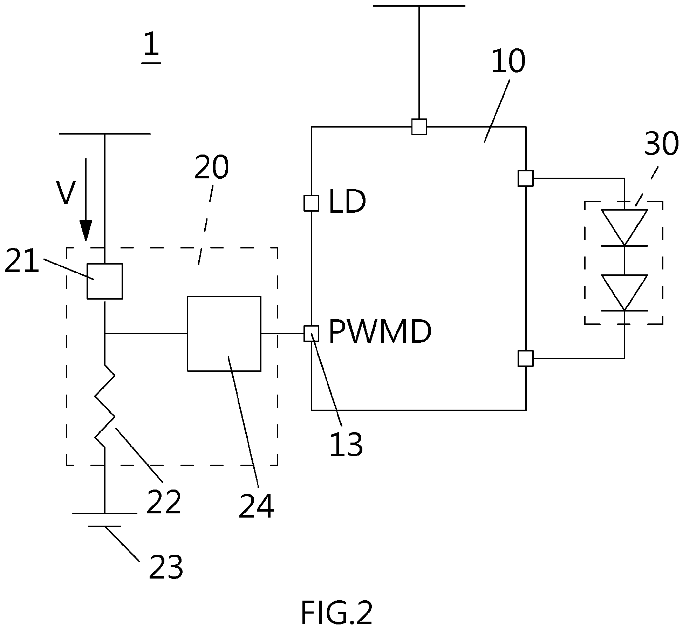

According to the second embodiment illustrated in FIG. 2, the photosensor 21 is serially connected to the DC voltage V, while the resistor 22 is serially connected between the photosensor 21 and the ground 23. The PWMD pin 13 is connected to a junction between the photosensor 21 and the resistor 22 through an inverter 24. Similar to that disclosed in the first embodiment, the photosensor 21 is employed herein to sense the ambient light intensity, so that a control voltage varying with the ambient light intensity is transmitted to the switch-mode power supply 10 via the PWMD pin 13, thereby turning the LED light source 30 on or off.

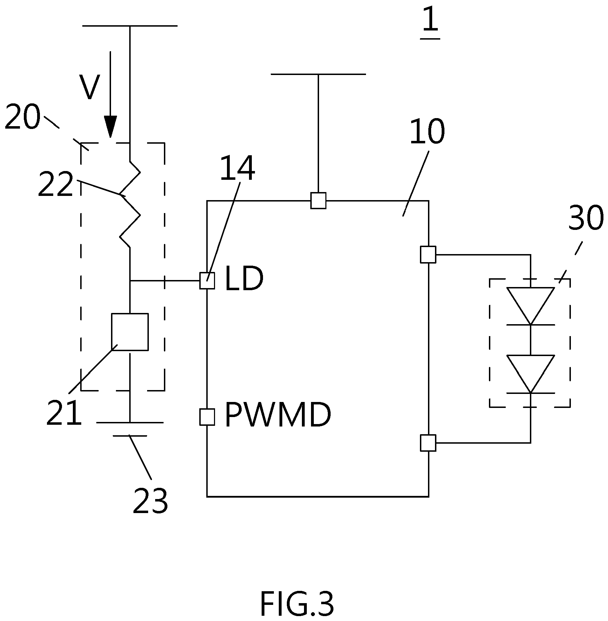

According to the third embodiment illustrated in FIG. 3, the control circuit 20 may be alternatively connected to the linear dimming (LD) pin 14. As shown, the resistor 22 is serially connected to the DC voltage V, while the photosensor 21 is serially connected between the resistor 22 and the ground 23. The photosensor 21 is employed herein to sense the ambient light intensity, so that a control voltage varying with the ambient light intensity is transmitted to the switch-mode power supply 10 via the LD pin 14, thereby turning the LED light source 30 on or off. The photosensor 21 is adapted to vary its electrical resistance in response to a change in the ambient light intensity. When the photosensor 21 senses that the ambient light intensity is low, the control circuit 20 outputs a high control voltage to the LD pin 14, thereby turning on the LED light source 30 automatically. Alternatively, when the photosensor 21 senses that the ambient light intensity is high, the control circuit 20 outputs a low control voltage to the LD pin 14, thus turning off the LED light source 30 automatically. Therefore, by virtue of simply connecting the control circuit 20 to the LD pin 14 that has already existed on the switch-mode power supply 10, the invention can output a control voltage based on the ambient light intensity sensed by the photosensor 21, thereby serving as an automatic switch that turns on or off the LED light source 30 without disconnection from the power source.

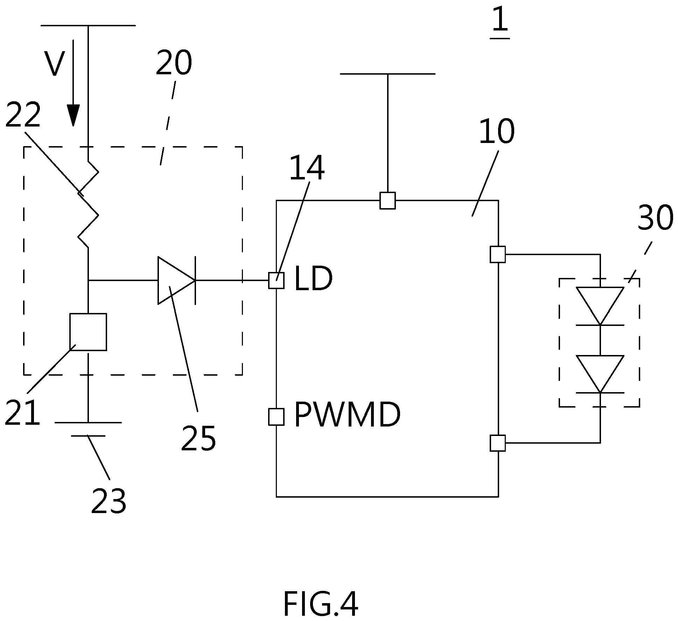

According to the fourth embodiment illustrated in FIG. 4, the LD pin 14 is connected to the junction between the photosensor 21 and the resistor 22 through a diode 25. The diode 25 has a forward biasing voltage which serves as a threshold voltage to ensure that the control voltage is transmitted to the switch-mode power supply 10 through the LD pin 14 only when it is greater than the forward biasing voltage of the diode 25. This arrangement can improve the flickering problem of the LED light source 30 caused by an overly low control voltage under a dark environment. Additionally, when the ambient becomes bright, the forward biasing voltage of the diode 25 can also ensure that the control voltage drops to zero rapidly, so that the LED light source 30 is turned off immediately to prevent the occurrence of flickering.

Furthermore, in the embodiments described above, the input terminal of the switch-mode power supply may be directly connected to a DC power source or connected to an AC power source through a rectifier circuit.

The invention herein merely requires connecting the control circuit 20 to either the PWMD pin 13 or the LD pin 14, both of which are built-in components on the switching power supply 10, and does not involve altering the existing layout of the switch-mode power supply 10. This setup enables automatic on-off control of the LED light source, while achieves energy-saving benefits and makes installation quite convenient, thereby enhancing user willingness to use. The invention primarily relies on the photosensor 21 to sense the ambient light intensity, whereby the automatic control of the LED light source is enabled in the absence of user's manual operation and without disconnection from the power source. Moreover, since most LED lamps on the market use switch-mode power supplies as their power source, users only need to connect the control circuit disclosed herein to the existing PWMD pin or LD pin on the conventional switch-mode power supply to achieve lighting control. The invention features a simple and cost-effective circuit structure, making it easy for users to operate and manage.

## Claims

1. A lighting control system, comprising:
a switch-mode power supply **10,** comprising an input terminal **11** for connection to a power source and an output terminal **12** for connection to a light-emitting diode (LED) light source **30,** wherein the switch-mode power supply **10** further comprises a pulse-width modulation dimming (PWMD) pin **13;** and
a control circuit **20,** comprising a photosensor **21** and a resistor **22** connected in series, wherein the control circuit **20** is connected at one end to a DC voltage **V** and grounded at the other end, and the PWMD pin **13** is connected to a junction between the photosensor **21** and the resistor **22,** and wherein the photosensor **21** is adapted to sense the ambient light intensity, so that a control voltage varying with the ambient light intensity is transmitted to the switch-mode power supply **10** via the PWMD pin **13,** thereby turning the LED light source **30** on or off.

2. The lighting control system according to Claim 1, wherein the resistor **22** is serially connected to the DC voltage **V,** while the photosensor **21** is serially connected between the resistor **22** and the ground **23.**

3. The lighting control system according to Claim 1, wherein the photosensor **21** is serially connected to the DC voltage **V,** while the resistor **22** is serially connected between the photosensor **21** and the ground **23,** and wherein the PWMD pin **13** is connected to a junction between the photosensor **21** and the resistor **22** through an inverter **24.**

4. A lighting control system, comprising:
a switch-mode power supply **10,** comprising an input terminal **11** for connection to a power source and an output terminal **12** for connection to a light-emitting diode (LED) light source **30,** wherein the switch-mode power supply **10** further comprises a linear dimming (LD) pin **14;** and
a control circuit **20,** comprising a photosensor **21** and a resistor **22** connected in series, wherein the control circuit **20** is connected at one end to a DC voltage **V** and grounded at the other end, and the LD pin **14** is connected to a junction between the photosensor **21** and the resistor **22,** and wherein the photosensor **21** is adapted to sense the ambient light intensity, so that a control voltage varying with the ambient light intensity is transmitted to the switch-mode power supply **10** via the LD pin **14,** thereby turning the LED light source **30** on or off.

5. The lighting control system according to Claim 4, wherein the resistor **22** is serially connected to the DC voltage **V,** while the photosensor **21** is serially connected between the resistor **22** and the ground **23,** and wherein the LD pin **14** is connected to the junction between the photosensor **21** and the resistor **22** through a diode **25.**

6. The lighting control system according to any one of the preceding Claims, wherein the photosensor **21** is adapted to vary its electrical resistance in response to a change in the ambient light intensity.

7. The lighting control system according to any one of the preceding Claims, wherein the photosensor **21** is adapted to sense the ambient light intensity, with its electrical resistance decreasing as the ambient light intensity increases, and with its electrical resistance increasing as the ambient light intensity decreases.
